# EUROPÄISCHE PATENTSCHRIFT

(11) **EP 2 377 834 B1**
(45) Veröffentlichungstag und Bekanntmachung des Hinweises auf die Patenterteilung: **15.05.2019**
(21) Anmeldenummer: 10400026.0
(22) Anmeldetag: 16.04.2010
(51) Int. Cl.: C04B 26/14, C04B 26/18

(54) **VERFAHREN ZUR HERSTELLUNG HARTER UND PORÖSER FORMKÖRPER, PORÖSE FORMKÖRPER UND DEREN VERWENDUNG**
METHOD FOR PRODUCING HARD AND POROUS MOULDS, MOULDS AND THEIR USE
PROCÉDÉ DE FABRICATION DE CORPS DE FORMAGE DURS ET POREUX, CORPS DE FORMAGE ET LEUR UTILISATION

(43) Veröffentlichungstag der Anmeldung: 19.10.2011
(73) Patentinhaber: Prospective Concepts AG, 8953 Dietikon (CH)
(72) Erfinder: Stoll, Kurt Dr., 73732 Esslingen (DE); Hirzel, Theodor, 8967 Widen (CH)
(74) Vertreter: Patentanwälte Magenbauer & Kollegen Partnerschaft mbB

(56) Entgegenhaltungen:
- DE-A1- 3 241 798
- GB-A- 1 442 836
- US-A- 3 755 213

## Beschreibung

Die Erfindung betrifft ein Verfahren zur Herstellung harter und poröser Formkörper mit einer Vielzahl von Kanälen zur Durchleitung von Fluiden.

Die US 3 755 213 offenbart die Herstellung verschiedener Schichten einer Spritzgußform, die beispielsweise für das Kunststoffspritzgießen eingesetzt werden kann. Es ist ein weibliches und ein männliches Formstück vorgesehen, die relativ zueinander beweglich sind und zwischen denen ein Hohlraum ausgebildet ist, in dem dann plastifiziertes Material, beispielsweise Kunststoff, einströmt und dort zum Spritzgußteil geformt wird. Damit das entstandene Spritzgußteil nach der Formgebung in einfacher Weise und schnell vom Formstück abgestoßen werden kann, wird das Spritzgußteil von einem Bett aus porösem Material umgeben. Das poröse Bett wird an seiner dem Spritzgußteil abgewandten Unterseite mit Druckluft beaufschlagt, die durch die Kanalstruktur im Bett strömt und an der Oberseite austritt, wodurch das Spritzgußteil vom Formstück abgestoßen wird.

Die DE 100 02 662 A1 beschreibt ein Verfahren zur Herstellung eines Bauelements. Zur Herstellung einer Aussenschalung und Innenschalung wird eine Mischung aus Hohlkugelaluminiumsilikat und einem Epoxid- und/oder Polyesterharz miteinander gemischt und bei rund 200°C einem Brennprozess ausgesetzt.

Die WO 2005/053818 A1 beischreibt ein durchströmungsporöses, eigenstabiles Filterelement.

Derartig hergestellte Formkörper, die als Fluid-Leitungssystem verwendet werden, sind beispielsweise in der EP 0 486 421 B1 beschrieben. Bei der Herstellung dieser Formkörper wird zunächst Metallpulver mit Hilfe eines Bindemittels durch Kneten zu Metallpartikel-Clustern geformt. Die Clustergröße beträgt hierbei mehrere Partikel der eingesetzten Metallpartikel des Metallpulvers. Das entstandene Clustergranulat wird dann mit einem Bindemittel gemischt und anschließend gepresst bevor es dann gesintert wird. Die Härtung der Mischung aus Clustergranulat und Bindemittel erfolgt beim Sinterprozess durch Polymerisation, wobei ein relativ hoher Druck angelegt werden muss. Der ausgehärtete Formkörper weist an seiner Oberfläche eine Vielzahl von unregelmäßig geformten Öffnungen oder Poren auf, wodurch bei Hindurchleitung von Fluid ein feinverteilter Fluidaustritt praktisch als Kontinuum über die gesamte Oberfläche erzielt werden kann. Das Material lässt sich in einfacher Weise bearbeiten, beispielsweise wie Holz, wodurch beispielsweise Holzbearbeitungswerkzeuge eingesetzt werden können. Es ist möglich, die Oberfläche des Formkörpers zu schleifen oder zu polieren, ohne dass die Poren verschlossen werden.

Die Herstellung des Clustergranulats durch Mischen von Metallpulver und Bindemittel mit anschließendem Knetvorgang ist jedoch relativ aufwändig. Außerdem erfordert die Aushärtung unter relativ hohem Druck einen nicht unerheblichen Energieaufwand.

Aufgabe der Erfindung ist es daher, ein Verfahren zur Herstellung eines Formkörpers der eingangs erwähnten Art bereitzustellen, mit dem Formkörper bei gleichbleibend guten Werkstoffeigenschaften einfach und in kostengünstiger Weise hergestellt werden können.

Diese Aufgabe wird durch ein Verfahren mit den Merkmalen des unabhängigen Anspruchs 1 gelöst. Weiterbildungen der Erfindung sind in den Unteransprüchen dargestellt.

Der durch das Verfahren hergestellte Formkörper besitzt eine feine, mikroporöse Struktur, in der eine Vielzahl von Kanälen ausgebildet sind, die zur Hindurchleitung von Fluid genutzt werden können. Der Fluidaustritt erfolgt an der Oberfläche des Formkörpers über die gesamte Oberfläche, d.h. die gesamte Formkörper-Oberfläche kann als Luftaustrittsfläche genutzt werden. Es sind also keine definierten Bereiche für den Fluidaustritt vorgesehen, sondern die Oberfläche des Formkörpers kann quasi als Kontinuum als Fluidaustrittsfläche genutzt werden.

Ein weiterer Vorteil ist, dass der Formkörper hervorragend sowohl manuell als auch maschinell bearbeitet werden kann. Die Zerspanbarkeit des Formkörpermaterials ist hervorragend und bestenfalls mit sehr leicht zerspanbarem Aluminium vergleichbar. Demzufolge ist der Formkörper quasi wie Holz verarbeitbar, beispielsweise mittels Holzbearbeitungswerkzeugen. Bei der maschinellen Bearbeitung kann ohne Kühlflüssigkeit, also trocken, gearbeitet werden, da das Formkörpermaterial bei der maschinellen Bearbeitung nicht warm wird. Bei der Nachbearbeitung des Formkörpers, beispielsweise durch Schleifen oder Polieren, wird die Porenstruktur an der Oberfläche nicht verschlossen. Die Porenstruktur bleibt also erhalten.

Bei der spanenden Bearbeitung des Formkörpers fallen die Späne in Pulverform an. Die bei Metalllegierungen erkennbare Aufbauschneidebildung tritt nicht auf. Spänestau bei engeren Späneformstufen tritt ebenfalls nicht auf. Das Formkörpermaterial ist verzugsarm und haptisch sehr angenehm. Das Formkörpermaterial ist ferner antistatisch, nicht brennbar, elektrisch nicht leitend und toxikologisch unbedenklich.

Bei der Herstellung des Formkörpers ist es nicht notwendig, zunächst Clustergranulat mit einem aufwändigen und zeitraubenden Knetprozess herzustellen, sondern Salzpulver und Bindemittelpulver werden zu einer Pulvermischung gemischt, das dann nach Einfüllen in die Ofenform ohne weiteren Bearbeitungsschritt gesintert wird. Beim Sintern oder sonstigem Temperieren ist es nicht notwendig, einen hohen Druck anzulegen, um den Aushärtevorgang einzuleiten, sondern die Aushärtung wird durch die Wärmeeinwirkung im Ofen erzielt. Im Vergleich mit der Herstellung der Formkörper aus dem Stand der Technik, die aus Clustergranulat aufgebaut sind, ist die Herstellung derartiger Formkörper also weniger zeitaufwändig und somit kostengünstiger.

Metallhydroxidpulver hat den Vorteil, dass die hiermit hergestellten Formkörper selbstlöschende Eigenschaften aufweisen, d.h. sich bei der Verbrennung zu Wasser zersetzen, das dann bei der Löschung eines Brandes als Wasserdampf zu Verfügung steht. Demgemäß lassen sich also aus Metallhydroxidpulver hergestellte Formkörper beim Brandschutz, beispielsweise als Brandschutzverkleidungselemente einsetzen.

In besonders bevorzugter Weise wird als Metallhydroxidpulver Aluminiumhydroxid verwendet.

Bei einer Weiterbildung der Erfindung wird als Bindemittelpulver ein in Pulverform vorliegendes Harz verwendet. Zweckmäßigerweise handelt es sich hierbei um ein Klebstoffharz.

Es ist möglich, ein Mehrkomponenten-Harzpulver zu verwenden, wobei als eine der Komponenten Epoxidharzpulver vorgesehen ist. In besonders bevorzugter Weise wird ein Gemisch aus Epoxidharzpulver und Polyesterharzpulver verwendet.

Das Mengenverhältnis von Metallhydroxidpulver und Bindemittelpulver in der Pulvermischung liegt im Bereich von ca. 5 Teilen Salzpulver zu 1 Teil Bindemittelpulver bis ca. 7 Teile Metallhydroxidpulver zu 1 Teil Bindemittelpulver, insbesondere ca. 6 Teile Metallhydroxidpulver zu 1 Teil Bindemittelpulver.

Bei einer Weiterbildung der Erfindung wird die Pulvermischung dem Ofen unverpresst zugeführt. Es ist also nicht notwendig, zunächst aus der Pulvermischung Presslinge zu formen oder eine insbesondere mechanische Verpressung der Pulverschicht, beispielsweise mittels eines Druckstempels, durchzuführen, wie es bei der Herstellung der Formkörper aus dem Stand der Technik der Fall ist. Somit kann ein weiterer Prozessschritt eingespart werden.

In besonders bevorzugter Weise wird das Sintern unter Vakuum durchgeführt.

Die Behandlungstemperatur ist abhängig vom eingesetzten Bindemittelpulver. Es ist notwendig, die Bindemittelpartikel zum Erweichen zu bringen, wodurch Bindemittelbrücken aus Bindemittel entstehen, die die Salzpartikel des Salzpulvers zusammenhalten. Die Behandlungstemperatur liegt bevorzugt bei mindestens 130 °C.

Die Erfindung umfasst ferner noch einen Formkörper, hergestellt nach dem Verfahren nach Anspruch 2, der ein mikroporöses Strukturskelett aus Aluminiumhydroxid-Partikelnaufweist, die über Bindemittelbrücken aus Bindemittel aneinander haften, wobei zwischen den Aluminiumhydroxid-Partikelneine Vielzahl von Kanälen ausgebildet sind, die über das gesamte Strukturskelett verteilt angeordnet sind und an einer Formkörper-Oberfläche des Formkörpers in Gestalt von unregelmäßig geformten Öffnungen über die gesamte Formkörper-Oberfläche verteilt ausmünden.

Ein derartiger Formkörper lässt sich beispielsweise als Luft-Gleitlager verwenden. Solche Luft-Gleitlager können beispielsweise zum berührungslosen Transport berührungsempfindlicher Gegenstände, wie Wafer, optischer Komponenten, beispielsweise Linsen, Spiegel, o. dgl. eingesetzt werden. Ein alternatives Anwendungsgebiet solcher Luft-Gleitlager ist die Papierindustrie. Hier können beispielsweise Papier-Umlenkrollen aus dem Formkörper-Material eingesetzt werden, wodurch der Verschleiß solcher Umlenkrollen, der bei der herkömmlichen Kontakt-Umlenkung sehr hoch ist, praktisch gegen null tendiert.

Es ist möglich, einen derartigen Formkörper als Schüttgutfördereinrichtung zur Förderung von insbesondere pulverförmigem Schüttgut zu verwenden. Beispielsweise könnten Trichterwände von Silo-trichtern, die an den Auslass von Schüttgutsilos angeschlossen sind, aus dem Formkörpermaterial ausgestaltet werden. Wird dann durch den Formkörper Druckluft gedrückt, ist ein zuverlässiger und stetiger Transport des Schüttguts möglich, ohne dass dieses an den Trichterwänden hängen bleibt.

Der Formkörper kann ferner als Begasungs- und/oder Befeuchtungseinrichtung dienen. Beispielsweise kann der Formkörper zur Wasserbelüftung eingesetzt werden, wodurch sich feine und großflächig verteilte Luftbläschen nach Art des "Champagner-Effekts" erzeugen lassen. Die kleinblasigen Luftbläschen haben im Vergleich zu den herkömmlich erzeugten deutlich größeren Luftblasen eine deutlich längere Verweilzeit im Wasser, bevor sie an die Wasseroberfläche gelangen, wodurch der Stofftransport zwischen den Luftbläschen und dem Wasser erhöht ist. Anwendungsgebiet wäre hier beispielsweise die Belüftung von Klärbecken oder Aquarien. Ferner kann der Formkörper auch beim Tauchen eingesetzt werden, beispielsweise als Mischelement für Tieftaucher zur Mischung von Sauerstoff und Stickstoff wodurch ein feinverteilter Mischgasaustrag möglich ist.

Setzt man den Formkörper als Befeuchtungselement ein, können beim Hindurchleiten von Flüssigkeit Aerosole erzeugt werden, die beispielsweise in der Klimatechnik zur Luftbefeuchtung verwendet werden könnten.

Schließlich ist der Formkörper als Tiefziehform zum Tiefziehen beispielsweise von Kunststofffolien einsetzbar. Dabei wird der Formkörper derart ausgeformt, dass er einen offenen Hohlraum bildet, an den dann eine Kunststofffolie angelegt werden kann. Durch Evakuieren des Hohlraums, d.h. Anlegen eines Unterdrucks an den fluiddurchlässigen Formkörper wird dann die Kunststofffolie in den Hohlraum hineingezogen und passt sich der Hohlraum-Form an.

Im Folgenden wird das Verfahren zur Herstellung von Formkörpern anhand eines Ausführungsbeispiels erläutert:
Aluminiumhydroxidpulver mit einer Korngröße im Bereich von 10*µ*m bis 160*µ*m (beispielsweise Alfrimal 80/200W, Fa. Alpha-Calcit) wird mit einem Harzgemisch aus Epoxidharzpulver und Polyesterharzpulver mit einer Korngröße < 100*µ*m (beispielsweise IGP-DURAmix34, Fa. IGP Pulvertechnik AG) im Verhältnis ca. 6 Teile Aluminiumhydroxidpulver und 1 Teil Harzgemisch gemischt. Der Mischvorgang wird in einem Betonmischer über die Dauer von ca. 2 bis 4 Stunden durchgeführt, um eine homogene Pulvermischung zu erzielen. Nach dem Mischvorgang wird die Pulvermischung in eine Ofenform eingefüllt. Hier kann beispielsweise eine quaderförmige Blechform verwendet werden, wodurch der Formkörper dann in Blockform erhalten wird. Die mit Pulvermischung gefüllte Blechform wird dann in einen Ofen gebracht und anschließend unter Vakuum bei ca. 170°C gesintert oder in sonstiger Weise temperiert. Die Behandlungsdauer im Ofen ist abhängig von der verwendeten Menge, kann aber beispielsweise bei insgesamt ca. 30kg eingesetzter Pulvermischung 6 bis 8 Stunden betragen. Beim Sintern werden die Harzpartikel erweicht, bleiben aber im Wesentlichen an Ort und Stelle. Das Bindemittel verflüssigt sich also nicht so weit, dass es zu einem Abfließen in Richtung Boden der Blechform kommt. Es werden Bindemittelbrücken gebildet, die benachbarte Aluminiumhydroxid-Partikel miteinander verbinden, wodurch der Formkörper aushärtet und hart wird. Nach dem Aushärten wird der Formkörper von der Blechform entfernt.

Der entstandene Formkörperblock steht dann zur Weiterverarbeitung bereit. Beispielsweise können daraus mittels einer Säge einzelne Formkörperplatten herausgetrennt werden. Es ist auch möglich, aus dem Formkörperblock beliebige andere Formen herauszugestalten, beispielsweise mittels eines Drechselvorgangs hergestellte Rotations-Formkörper.

Der entstandene ausgehärtete Formkörper hat ungefähr folgende technische Daten:

| Farbton: | Perlweiss |
|---|---|
| Dichte: | 1,7 kg/dm³ |
| Shorehärte D: | 82 |
| Luftdurchlass(60mm unter Vakuum): | 52 |
| Luftdurchströmung (80mm x 300mm): | 2bar: 110 1/min, |
| | 4bar: 300 1/min |
| Wärmeformbeständigkeit: | 90°C |
| Wärmeausdehnungskoeffizient(DIN 53752): | 35-40x10 mm/K |

## Patentansprüche

1. Verfahren zur Herstellung harter und poröser Formkörper mit einer Vielzahl von Kanälen zur Durchleitung von Fluiden, das Verfahren mit folgenden Schritten:
- Bereitstellen von Metallhydroxidpulver und Bindemittelpulver,
- Mischen des Metallhydroxidpulvers und des Bindemittelpulvers zu einer Pulvermischung,in einem Mengenverhältnis von Metallhydroxidpulver zu Bindemittelpulver in der Pulvermischung im Bereich von ca. 5 Teilen Metallhydroxidpulver zu 1 Teil Bindemittelpulver bis ca. 7 Teilen Metallhydroxidpulver zu 1 Teil Bindemittelpulver.
- Einfüllen der Pulvermischung in eine Ofenform,
- Sintern oder sonstiges Temperieren der Pulvermischung in einem Ofen zu einem harten und porösen, fluiddurchlässigen Formkörper und
- Entfernen der Ofenform vom Formkörper.

2. Verfahren nach Anspruch 1, **dadurch gekennzeichnet, dass** als Metallhydroxidpulver Aluminiumhydroxidpulver verwendet wird.

3. Verfahren nach einem der vorhergehenden Ansprüche, **dadurch gekennzeichnet, dass** als Bindemittelpulver ein in Pulverform vorliegendes Harz verwendet wird.

4. Verfahren nach Anspruch 3, **dadurch gekennzeichnet, dass** es sich bei dem Harz um ein Mehrkomponenten-Harzpulver handelt, wobei als eine der Komponenten Epoxidharzpulver vorgesehen ist.

5. Verfahren nach Anspruch 4, **dadurch gekennzeichnet, dass** ein Harzgemisch aus Epoxidharzpulver und Polyesterharzpulver verwendet wird.

6. Verfahren nach einem der vorhergehenden Ansprüche, **dadurch gekennzeichnet, dass** das Mengenverhältnis 6 Teile Metallhydroxidpulver zu 1 Teil Bindemittelpulver beträgt.

7. Verfahren nach einem der vorhergehenden Ansprüche, **dadurch gekennzeichnet, dass** die Pulvermischung dem Ofen unverpresst zugeführt wird.

8. Verfahren nach einem der vorhergehenden Ansprüche, **dadurch gekennzeichnet, dass** das Sintern oder sonstige Temperieren unter Vakuum stattfindet.

9. Verfahren nach einem der vorhergehenden Ansprüche, **dadurch gekennzeichnet, dass** das Sintern oder sonstige Temperieren bei einer Behandlungstemperatur von mindestens 130°C stattfindet.

10. Formkörper, hergestellt nach dem Verfahren gemäß Anspruch 2, mit einem mikroporösen Strukturskelett aus Aluminiumhydroxid-Partikeln, die über Bindemittelbrücken aus Bindemittel aneinander haften, wobei zwischen den Aluminiumhydroxid-Partikeln eine Vielzahl von Kanälen ausgebildet sind, die über das gesamte Strukturskelett verteilt zugeordnet sind und an einer Formkörper-Oberfläche des Formkörpers in Form von unregelmäßig geformten Öffnungen, über die gesamte Formkörper-Oberfläche verteilt ausmünden.

11. Verwendung des Formkörpers nach Anspruch 10 als Luft-Gleitlager.

12. Verwendung des Formkörpers nach Anspruch 10 als Schüttgutfördereinrichtung zur Förderung pulverförmigen Schüttguts.

13. Verwendung des Formkörpers nach Anspruch 10 als Begasungs- und/oder Befeuchtungseinrichtung.

14. Verwendung des Formkörpers nach Anspruch 10 als Tiefziehform.

## Claims

1. Method for producing hard and porous moulded bodies with a plurality of passages for conducting fluids, the method comprising the following steps:
- the provision of metal hydroxide powder and powdered binding agent,
- the mixing of the metal hydroxide powder and the powdered binding agent to produce a powder mixture in a metal hydroxide powder-to-powdered binding agent ratio in the powder mixture in the range from approximately 5 parts metal hydroxide powder to 1 part powdered binding agent to approximately 7 parts metal hydroxide powder to 1 part powdered binding agent,
- the placing of the mixture in a furnace mould,
- the sintering or other tempering of the powder mixture in a furnace to produce a hard and porous, fluid-permeable moulded body, and
- the removal of the furnace mould from the moulded body.

2. Method according to claim 1, **characterised in that** aluminium hydroxide powder is used as metal hydroxide powder.

3. Method according to any of the preceding claims, **characterised in that** a resin present in powder form is used as powdered binding agent.

4. Method according to claim 1, **characterised in that** the resin is a multicomponent resin powder, with epoxy resin powder being provided as one of the components.

5. Method according to claim 4, **characterised in that** a resin mixture of epoxy resin powder and polyester resin powder is used.

6. Method according to any of the preceding claims, **characterised in that** the ratio is 6 parts metal hydroxide powder to 1 part powdered binding agent.

7. Method according to any of the preceding claims, **characterised in that** the powder mixture is fed into the furnace without having been pressed.

8. Method according to any of the preceding claims, **characterised in that** the sintering or other tempering process is carried out in a vacuum.

9. Method according to any of the preceding claims, **characterised in that** the sintering or other tempering process is carried out at a treatment temperature of at least 130°C.

10. Moulded body produced in accordance with the method according to claim 2, with a microporous structural skeleton of aluminium hydroxide particles adhering to one another via binding agent bridges of binding agent, wherein a plurality of passages distributed over the entire structural skeleton and terminating at a moulded body surface of the moulded body in the form of openings of irregular shape distributed over the entire moulded body surface is formed between the aluminium hydroxide particles.

11. Use of the moulded body according to claim 10 as an air plain bearing.

12. Use of the moulded body according to claim 10 as a bulk material conveying device for conveying powdered bulk materials.

13. Use of the moulded body according to claim 10 as a fumigating and/or moistening device.

14. Use of the moulded body according to claim 10 as a deep-drawing mould.

## Revendications

1. Procédé de fabrication de corps de formage durs et poreux avec une pluralité de canaux pour le passage de fluides, procédé avec les étapes suivantes :
- mise à disposition de poudre d'hydroxyde métallique et de poudre de liant,
- mélange de la poudre d'hydroxyde métallique et de la poudre de liant en un mélange de poudre, dans un rapport de quantité de poudre d'hydroxyde métallique sur poudre de liant dans le mélange de poudre de l'ordre d'environ 5 parties de poudre d'hydroxyde métallique pour 1 partie de poudre de liant jusqu'à environ 7 parties de poudre d'hydroxyde métallique pour 1 partie de poudre de liant,
- versement du mélange de poudre dans un moule pour four,
- frittage ou autre mise à température du mélange de poudre dans un four en un corps de formage perméable aux fluides, dur et poreux et
- retrait du moule pour four du corps de formage.

2. Procédé selon la revendication 1, **caractérisé en ce que** de la poudre d'hydroxyde d'aluminium est utilisée en tant que poudre d'hydroxyde métallique.

3. Procédé selon l'une quelconque des revendications précédentes, **caractérisé en ce qu'**une résine présente sous forme de poudre est utilisée en tant que poudre de liant.

4. Procédé selon la revendication 3, **caractérisé en ce que** la résine est une poudre de résine à plusieurs composants, dans lequel de la poudre de résine époxy est prévue en tant qu'un des composants.

5. Procédé selon la revendication 4, **caractérisé en ce qu'**un mélange de résine en poudre de résine époxy et de poudre de résine polyester est utilisé.

6. Procédé selon l'une quelconque des revendications précédentes, **caractérisé en ce que** le rapport de quantité est de 6 parties de poudre d'hydroxyde métallique pour 1 partie de poudre de liant.

7. Procédé selon l'une quelconque des revendications précédentes, **caractérisé en ce que** le mélange de poudre est amené au four en étant non compressé.

8. Procédé selon l'une quelconque des revendications précédentes, **caractérisé en ce que** le frittage ou autre mise à température a lieu sous vide.

9. Procédé selon l'une quelconque des revendications précédentes, **caractérisé en ce que** le frittage ou autre mise à température a lieu à une température de traitement d'au moins 130 °C.

10. Corps de formage, réalisé selon le procédé selon la revendication 2, avec un squelette structurel microporeux en particules d'hydroxyde d'aluminium, qui adhèrent les unes aux autres par le biais de ponts de liant en liant, dans lequel entre les particules d'hydroxyde d'aluminium sont réalisés une pluralité de canaux, qui sont affectés de manière répartie sur tout le squelette structurel et débouchent de manière répartie sur toute la surface du corps de formage au niveau d'une surface de corps de formage du corps de formage sous forme d'ouvertures formées de manière irrégulière.

11. Utilisation du corps de formage selon la revendication 10 en tant que palier lisse d'air.

12. Utilisation du corps de formage selon la revendication 10 en tant que dispositif de transport de produit en vrac pour le transport de produit en vrac pulvérulent.

13. Utilisation du corps de formage selon la revendication 10 en tant que dispositif de gazage et/ou d'humidification.

14. Utilisation du corps de formage selon la revendication 10 en tant que moule d'emboutissage.
